(19) Europäisches Patentamt
European Patent Office
Office européen des brevets

(11) **EP 2 106 020 A2**

(12) **EUROPEAN PATENT APPLICATION**

(43) Date of publication:
**30.09.2009 Bulletin 2009/40**

(51) Int Cl.:
***H02P 23/00*** *(2006.01)*

(21) Application number: **09001416.8**

(22) Date of filing: **02.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.03.2008 JP 2008084152**

(71) Applicant: **Hitachi Ltd.**
**Chiyoda-ku**
**Tokyo 100-8280 (JP)**

(72) Inventors:
• **Izumi, Shiho**
  **Tokyo 100-8220 (JP)**
• **Kaneko, Satoru**
  **Tokyo 100-8220 (JP)**
• **Takaku, Yutaka**
  **Tokyo 100-8220 (JP)**

(74) Representative: **MERH-IP**
**Matias Erny Reichl Hoffmann**
**Paul-Heyse-Strasse 29**
**80336 München (DE)**

(54) **Motor controller**

(57) The present invention provides a motor controller (100) capable of selecting a motor drive system that provides the best possible system efficiency, according to monitored parameters indicative of the vehicle condition and the conditions of the mounted components. A drive signal processing block (140) of the motor controller (100) outputs drive signals to the motor (4) by using a first drive system and a second drive system causing less switching loss than the first drive system, depending on a demanded torque for the motor (4). A drive system determination block (130), when an operating point of the motor (4) allows selection between the first drive system and the second drive system, performs switching from the first drive system to the second drive system, based on the condition of an electric component of the vehicle (1) or the vehicle running condition.

# FIG. 3

**Description**

FILED OF THE INVENTION

The present invention relates to a motor controller and particularly to a motor controller suitable for controlling a motor that is used in a gasoline-electric hybrid car or an electric-powered vehicle.

BACKGROUND OF THE INVENTION

Such a motor drive control system is generally known that converts a direct-current (DC) voltage into an alternating-current (AC) voltage by an inverter to control a three-phase alternating-current motor. Owing to that this kind of motor drive system controls the torque of an alternating-current (AC) motor precisely in accordance with a command value, diverse drive systems are proposed. For example, a system generating voltage signals to be applied to respective phases of an AC motor by inverter switching operation according to pulse width modulation (PWM) control (called a PWM drive system) exhibits good controllability and is commonly used. Another system applies rectangular wave voltage signals in which PWM duty is fixed to a peak value to the motor and controls the torque by controlling the phases of the rectangular wave voltage signals (which is called a rectangular wave drive system).
Since there is a limitation of voltage that can be supplied in the PWM drive system, a motor controller that switches one control system to another for application so that the rectangular wave drive system is used as the situation demands is known (e.g., refer to Patent Document 1).
[Patent Document 1] JP-A No. Hei 11-299297(1999)

SUMMARY OF THE INVENTION

A gasoline-electric hybrid car typically experiences an unpredictable change in vehicle condition and environment. Electric components mounted in the car should operate at as high efficiency as possible to always meet their specifications.
However, the motor controller described in Patent Document 1 is arranged to perform switching between the PWM drive system and the rectangular wave drive system, when the revolving speed of the motor and the required torque reach predetermined conditions. Because it takes no consideration for the vehicle condition and the conditions of the mounted components, switched use of these systems does not take advantage of each drive system. Its problem is that it is not always possible to achieve driving the motor with high efficiency.
An object of the present invention is to provide a motor controller capable of selecting a motor drive system that provides the best possible system efficiency, according to monitored parameters indicative of the vehicle condition and the conditions of the mounted components.
(1) To achieve the above object, the present invention resides in a motor controller for a motor that is driven by an inverter, the motor controller comprising a drive signal processing block that outputs drive signals to the motor by using a first drive system and a second drive system causing less switching loss than the first drive system, depending on a demanded torque for the motor; and a drive system determination block that, when an operating point of the motor allows selection between the first drive system and the second drive system, performs switching from the first drive system to the second drive system, based on a condition of an electric component of a vehicle or a running condition of the vehicle.
The thus configured motor controller becomes able to select a motor drive system that provides the best possible system efficiency, according to monitored parameters indicative of the vehicle condition and the conditions of the mounted components.
(2) In the motor controller described above, the drive system determination block is preferably adapted to perform switching from the first drive system to the second drive system, if temperature of the inverter which is the condition of an electric component of the vehicle or a time rate of change of the temperature has exceeded a predetermined value.
(3) In the motor controller described above, the drive system determination block is preferably adapted to perform switching from the second drive system to the first drive system, if the inverter temperature which is the condition of an electric component of the vehicle has become less than a second predetermined value that is smaller than the foregoing predetermined value.
(4) In the motor controller described above, the drive system determination block is preferably adapted to perform switching from the first drive system to the second drive system, if charging state of a battery which is the condition of an electric component of the vehicle is lower than a predetermined value or a rate of decrease in the charging state has exceeded a predetermined value.
(5) In the motor controller described above, the drive system determination block is preferably adapted to perform switching from the first drive system to the second drive system, if a demanded drive torque which is a running condition of the vehicle is large.

(6) In the motor controller described above, the drive system determination block is preferably adapted to perform switching from the first drive system to the second drive system, if an accelerator pedal position which is a running condition of the vehicle or a time rate of change of the accelerator pedal position is larger than a predetermined value.

(7) In the motor controller described above, the drive system determination block is preferably adapted to perform switching from the second drive system to the first drive system, if the charging state of the battery which is the condition of an electric component of the vehicle is higher than a predetermined value or a rate of increase in the charging state has exceeded a predetermined value.

According to the present invention, it becomes possible to select a motor drive system that provides the best possible system efficiency, according to monitored parameters indicative of the vehicle condition and the conditions of the mounted components.

The above-mentioned features may be combined in any way, partly or as a whole.

BRIEF DESCRIPTION OF THE DRAWINGS

FIG. 1 is a system configuration diagram showing the structure of a hybrid car using an AC motor in which a motor controller according to a first embodiment is mounted.

FIG. 2 is a system configuration diagram showing the structure of a motor control system using the motor controller according to the first embodiment of the invention.

FIG. 3 is a block diagram showing the configuration of the motor controller according to the first embodiment of the invention.

FIG. 4 is a diagram to explain a PWM drive system that is used in the motor controller according to the first embodiment of the invention.

FIG. 5 is a diagram to explain a rectangular wave drive system that is used in the motor controller according to the first embodiment of the invention.

FIG. 6 is a diagram to explain the rectangular wave drive system that is used in the motor controller according to the first embodiment of the invention.

FIG. 7 is a flowchart illustrating a procedure for motor drive system switching control by the motor controller according to the first embodiment of the invention.

FIG. 8 is a diagram to explain motor drive system switching control by the motor controller according to the first embodiment of the invention.

FIG. 9 is a diagram to explain motor drive system switching control by the motor controller according to the first embodiment of the invention.

FIG. 10 is a diagram to explain motor drive system switching control by the motor controller according to the first embodiment of the invention.

FIG. 11 is a flowchart illustrating a procedure for motor drive system switching control by the motor controller according to a second embodiment of the invention.

FIG. 12 is a flowchart illustrating a procedure for motor drive system switching control by the motor controller according to a third embodiment of the invention.

DETAILED DESCRIPTION OF THE PREFERRED EMBODIMENTS

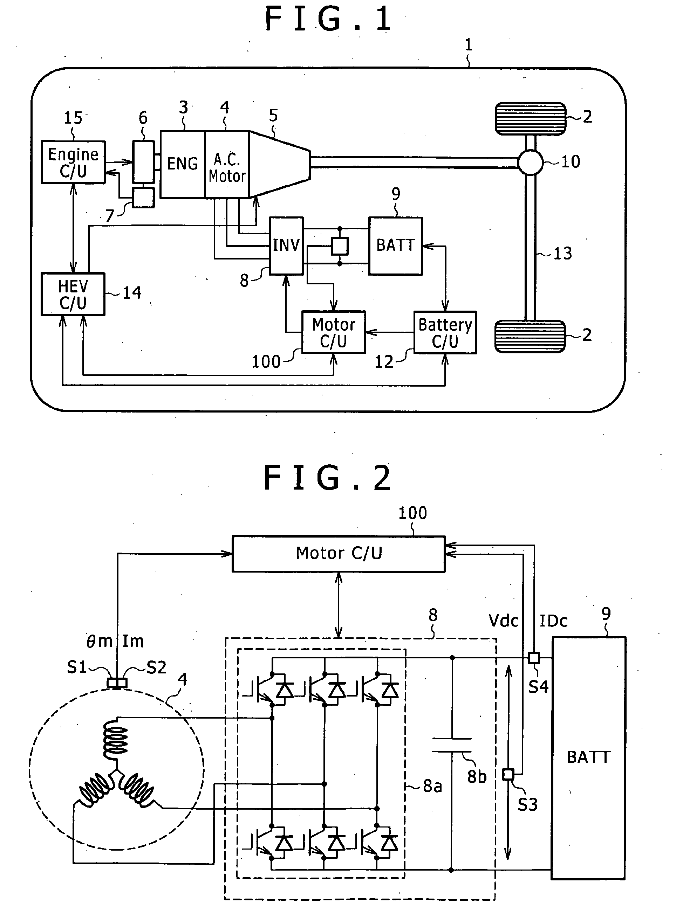

In accordance with a first embodiment of the invention, how a motor controller is constructed and how it operates will be described hereinafter using FIGS. 1 to 10.

To begin with, an explanation is provided for the structure of a gasoline-electric hybrid car using an alternating-current (AC) motor, wherein the motor controller of the first embodiment is mounted in the hybrid car.

FIG. 1 is a system configuration diagram showing the structure of the hybrid car using the AC motor in which the motor controller of the first embodiment is mounted.

The hybrid car 1 is equipped with an engine 3 and an AC motor 4. The drive force of the engine 3 is transmitted via a transmission 5 and an axle 13 to drive wheels 2 and drives the drive wheels 2. The output of the engine 3 is controlled by an electrically controlled throttle 6 according to a command from an engine control unit 15. The electrically controlled throttle 6 is provided with an accelerator position sensor 7 to detect the position of an accelerator.pedal.

The drive force of the AC motor 4 is transmitted via differential gears 10 and the axle 13 to the drive wheels 2 and drives the drive wheels 2. Although the AC motor 4 is directly connected to the axle 13 as illustrated in FIG. 1, the AC motor 4 may be connected to the axle via a coupling/decoupling mechanism such as a clutch.

The AC motor 4 is a motor/generator. The AC motor 4 outputs the drive force when operating as the motor. The AC motor 4 also outputs AC power when serving as an electric generator driven by the engine 3 and the drive wheels 2.

An inverter 8 is provided to adaptively control the demanded motive power produced by the AC motor 4. The inverter 8 converts DC power stored in a battery 9 into AC power and supplies the AC power to the AC motor 4. In regenerative braking operation and electricity generating operation, AC power output by the AC motor 4 is converted into DC power by the inverter, 8 and the DC power is supplied to the battery 9.

A HEV controller 14 is linked to an engine controller 15, a motor controller 100, and a battery controller 12 by a communication means such as CAN. This controller is responsible for control as a HEV system which executes calculation for, inter alia, a torque command to the AC motor 4, based on vehicle information and the conditions of components.

The battery controller 12 executes calculation for parameters such as charging state of the battery 9, current limit, electric power limit, temperature, and life. The motor controller 100 drives the inverter 8, based on a torque command to the AC motor 4 obtained from the upper-level HEV controller 14.

The motor controller 100 selects a motor drive system which is as highly efficient as possible and drives the inverter 8, based on the condition of the vehicle and the conditions of the mounted components detected by the HEV controller 14, the battery controller 12, and the like.

With reference to Fig. 2, then, an explanation is provided for the structure of a motor control system using the motor controller of the present embodiment.

FIG. 2 is a system configuration diagram showing the structure of a motor control system using the motor controller according to the first embodiment of the invention.

An input terminal of the inverter 8 is connected to an output terminal of the battery 9. The inverter 8 converts a DC voltage Vdc from the battery 9 into an AC voltage and applies the AC voltage to the AC motor 4. Here, the inverter 8 is comprised mainly of a power switching element bridge 8a and a smoothing capacitor 8b.

To the motor controller 100, the following are input: rotor magnetic pole position θm of the AC motor 4 detected by a magnetic pole sensor S1; motor current Im detected by a current sensor S2; DC voltage from the battery 9 detected by a voltage sensor S3; and current from the battery 9 detected by a current sensor S4.

The motor controller 100 determines an AC voltage to be applied to the AC motor 4 from the inverter8, based on a demanded torque command from the HEV controller 14 shown in FIG. 1 and outputs a voltage command (voltage pulse) to the inverter 8.

Also, the motor controller 100 selects a motor drive system which is as highly efficient as possible and drives the inverter 8, based on parameters (e.g., vehicle speed, accelerator pedal position, etc.) related to the vehicle running condition as well as parameters (e.g., the temperatures of the motor, inverter, and battery, the charging state, SOC (State of Charge) of the battery, etc.) related to the conditions of the components, detected by the HEV controller 14, the battery controller 12, and the like.

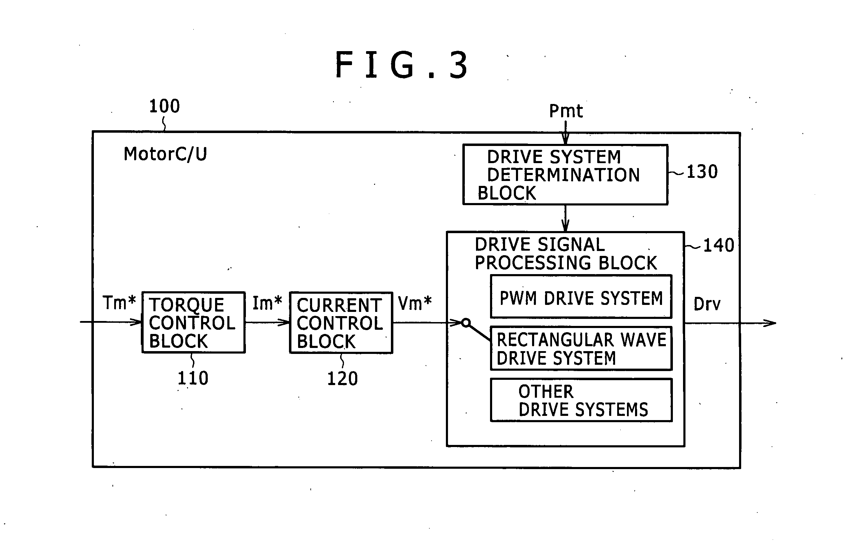

With reference to FIG. 3, then, a description is provided for the configuration of the motor controller 100 of the present embodiment.

FIG. 3 is a block diagram showing the configuration of the motor controller according to the first embodiment of the invention.

The motor control arrangement of the motor controller 100 comprises a torque control block 110, a current control block 120, a drive system determination block 130, and a drive signal processing block 140.

The torque control block 110 takes input of a demanded torque command Tm* for the motor from an upper-level controller, the HEV controller 14 shown in FIG. 1. The torque control block 110 executes calculation to derive a motor current command Im* from the demanded torque command Tm* for the motor. In a variation, a speed control arrangement may be constructed on an upper level of the torque control block 110.

The current control block 120 executes calculation for a three-phase voltage command Vm* for the motor so that the motor current Im detected by the current sensor S2 shown in FIG. 2 conforms to the motor current command Im* obtained by the torque control block 110. Vector control is applied to AC motor control and a current control system with d-q coordinates is typically formed. Details on the vector control system are not explained herein.

The drive signal processing block 140 converts the voltage command Vm* for the AC motor obtained by the current control block 120 into a drive signal Drv and outputs the drive signal to the inverter 8 shown in FIG. 2. Typically used drive systems for the inverter are a PWM drive system and a rectangular wave drive system. The drive signal processing block 140 is provided with a PWM drive system 142, a rectangular wave drive system 144, and other drive systems 146 in which a motor voltage command Vm* is converted into a drive signal Drv to drive the inverter. The PWM drive system 142 enables inverter control with high precision, whereas it induces a relatively large switching loss in the inverter. The rectangular wave drive system 144 is inferior to the PWM drive system in the precision of inverter control, but the switching loss in the inverter is less than that induced by the PWM drive system. Other drive systems 146 may optionally be used, which are inferior to the PWM drive system in the precision of inverter control. Other drive systems 14 6 may be, for example, a two-phase modulation system and an overmodulation system, each of which can be regarded as a variation of the PWM drive system. Besides the two-phase modulation system and the overmodulation system, other drive systems 145 may include a drive system causing less switching loss in the inverter than other PWM drive systems.

The drive signal processing block 140 generates signals in accordance with a drive system determined by the drive system determination block 130.

The drive system determination block 130 selects and determines a drive system causing as less loss as possible, based on the parameters Pmt indicating the conditions of the components such as the motor, inverter, battery, and engine and the vehicle-related parameters Pmt such as vehicle speed, accelerator pedal position, and target drive torque based thereon.

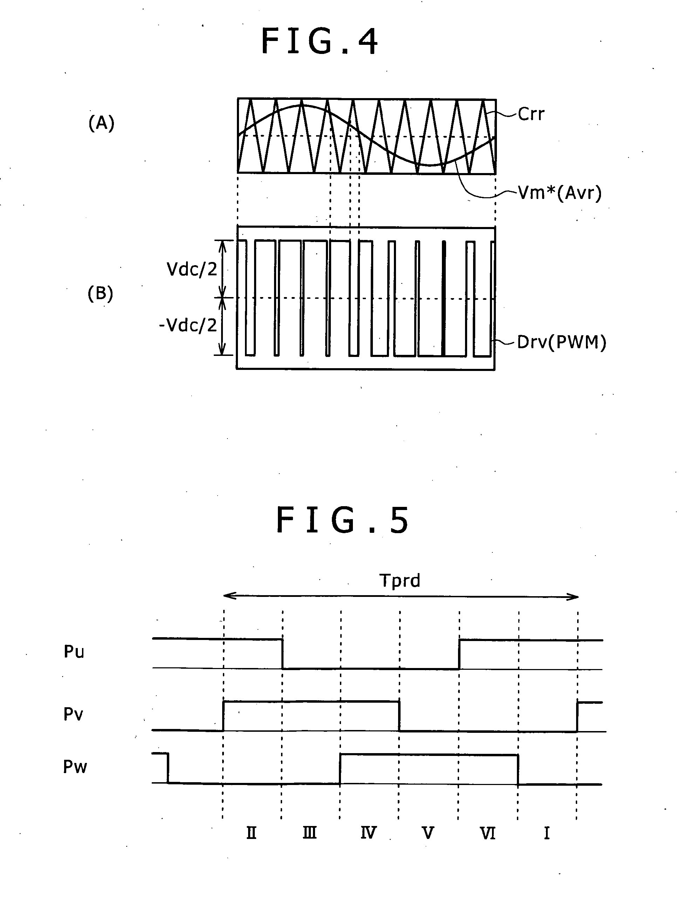

With reference to FIG. 4, then, the PWM drive system that is used in the motor controller of the present embodiment is explained below.

FIG. 4 is a diagram to explain the PWM drive system that is used in the motor controller according to the first embodiment of the invention.

In the sinusoidal PWM drive system, a sinusoidal AC voltage to be applied to the motor is converted into PWM signals which are supplied as drive signals.

FIG. 4(A) shows a PWM carrier Crr which is produced by calculation in the motor controller 100 and one phase of a motor voltage command (modulating wave) Vm* for one cycle which is output by the motor control arrangement. PWM signal Drv (PWM) shown in FIG. 4(B) is generated from comparison in amplitude between the PWM carrier Crr and the motor voltage command (modulating wave) Vm* shown in Fig. 4 (A). The amplitude of the voltage command is converted into a pulse width of the PWM signal. In the power switching element bridge 8a in the inverter 8 shown in Fig. 2, switching takes place based on this PWM signal.

In the example presented in FIG. 4, the PWM signal Drv (PWM) for one phase of the three-phase AC motor is shown. Similar PWM signals Drv (PWM) for the remaining two phases are also generated.

In the PWM drive system, the amplitude of an AC voltage that is actually applied to the AC motor 4 is equal to the peak value of its basic wave being about one half of the corresponding DC voltage. Even in a case that a voltage utilization improvement strategy in which a triple harmonic wave is superimposed onto the basic wave is additionally taken to improve the rate of utilization of the output voltage of the inverter, this strategy only makes an increase of about 15% in the amplitude of the basic wave.

The PWM drive system enables the application of an AC voltage to the motor in accordance with the command value with high precision (that is, it enables control of the motor output torque with high precision), whereas the voltage utilization rate is limited in this system. Due to that the output voltage is limited within a given range and that the carrier frequency ranges from several kHz to ten and several kHz, switching loss occurs in the inverter.

The two-phase modulation system uses two phases of PWM signals Drv (PWM) to drive the AC motor, instead of three phases of PWM signals Drv (PWM) to drive the AC motor. The overmodulation system generates PWM signals Drv (PWM), wherein the peak value of the motor voltage command (modulating signal) Vm* shown in Fig. 4(A) is limited to a predetermined level.

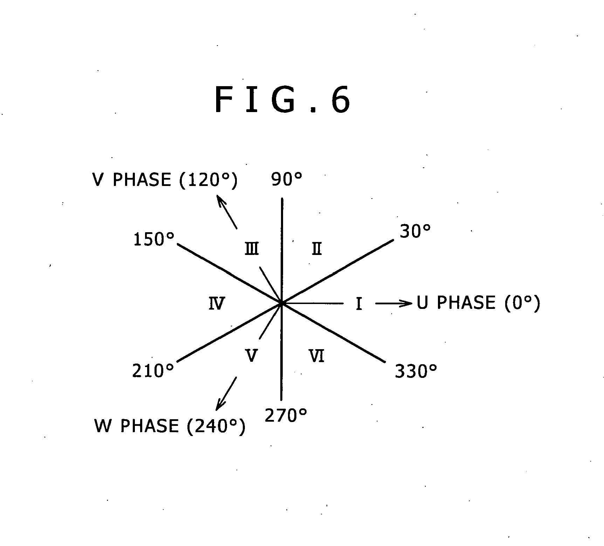

With reference to FIGS. 5 and 6, then, the rectangular wave drive system that is used in the motor controller of the present embodiment is explained below.

FIGS. 5 and 6 are diagrams to explain the rectangular wave drive system that is used in the motor controller according to the first embodiment of the invention.

It has recently been practiced that rectangular wave drive signals (one pulse drive) in which a voltage pulse is only turned on and off in accordance with positive and negative signs of a voltage command are used in a high motor speed range instead of PWM drive signals. In the rectangular wave drive system, conversion to PWM signals is not performed. A rectangular wave drive signal has a waveform in which the pulse is turned on and off in accordance with the positive and negative signs of an AC voltage signal to be applied. Therefore, it is possible to apply a peak voltage that the inverter can output to the motor and to drive the motor in a wider operating range.

FIG. 5 shows inverter output signals Pu, Pv, and Pw which corresponds to U, V, and W phases of rectangular wave drive signals. Time Tprd denotes one cycle of the motor.

In the case of rectangular wave driving, voltage pulses are consistent with the motor frequency, differing from the carrier frequency in the case of PWM driving. A high level pulse is output if an AC voltage command for the motor is positive and a low level pulse is output if the AC voltage is negative. In the rectangular wave driving explained herein, one pulse without switching is appearing for a half motor cycle, during which a peak voltage is applied that the inverter can output. Because switching occurs twice per phase during one motor cycle, switching loss in the inverter is negligible.

FIG. 6 shows mapping of rectangular wave drive pulse patterns, wherein three phases U, V, and W of AC voltage are mapped in fixed coordinates in relation to the voltage pulses shown in Fig. 5. In the fixed coordinates shown in FIG. 6, the U, V and W phases of 120° are arranged, wherein the U phase Ph-U starts at 0° assumed to be a reference point, the V phase Ph-v starts at 120°, and the W phase Ph-W starts at 240°. When the rectangular wave drive pulse patterns are mapped in this fixed coordinates, on/off switching occurs at the borders of six sectors and the pulse patterns for each phase correspond to six patterns (combination of three phases of pulses). On/off switching in each pulse occurs at 30°, 90°, 150°, 210°, 270°, and 330° in the fixed coordinates of three-phase AC voltage. In this rectangular wave driving, it is thus possible to use the peak output voltage of the inverter and thereby drive the motor highly efficiently, and, accordingly, the output torque of the motor can be increased about 20-30% in comparison with the PWM driving.

In the rectangular wave driving, however, voltage pattern updates take place by only six times for one motor cycle. Because the number of times of voltage updates is fewer than the PWM driving, the motor control operation is susceptible to disturbance such as speed change. Furthermore, because the number of times of voltage updates depends on the motor frequency, a same pulse pattern continues to be applied to the motor for an exceedingly long period when the motor runs at low speed. This gives rise to torque ripples having a harmful effect. Moreover, in an extremely low range of speed, there is a possibility that current flowing in the motor easily goes up to an overcurrent level.

For this reason, the rectangular wave driving is not applied in a low speed range. The motor controller for a hybrid car typically uses the PWM driving in the low speed range including stop and uses the rectangular·wave driving in the medium and high speed range.

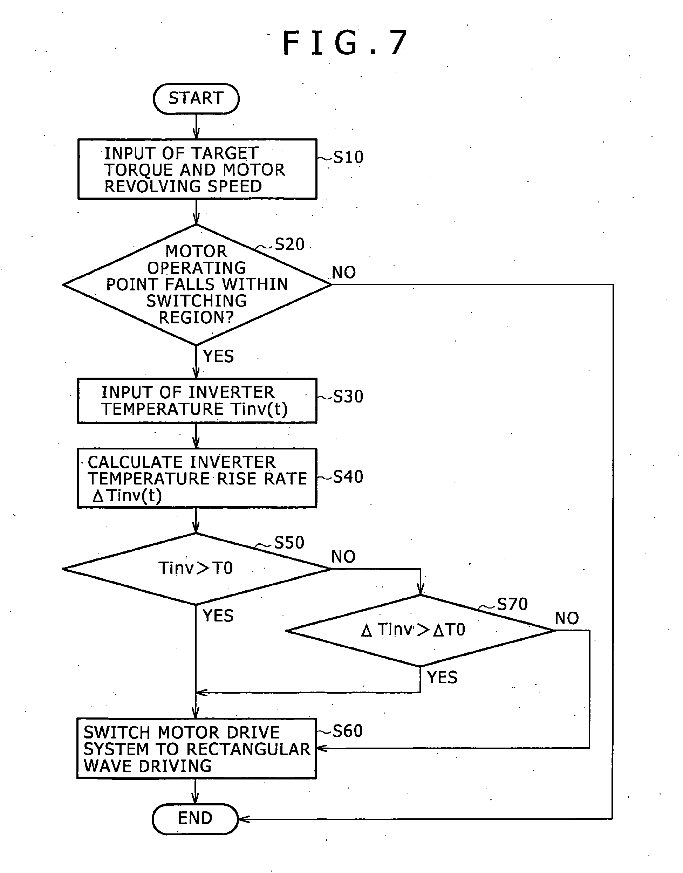

With reference to FIGS. 7 to 9, then, a description is provided for how motor drive system switching control is performed by the motor controller of the present embodiment.

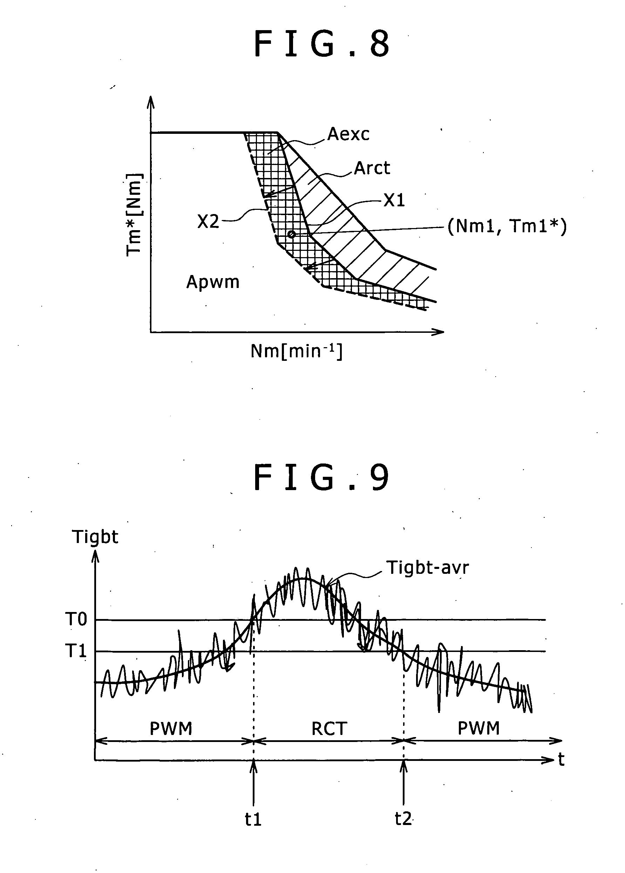

FIG. 7 is a flowchart illustrating a procedure for motor drive system switching control by the motor controller according to the first embodiment of the invention. FIGS. 8 and 9 are diagrams to explain motor drive system switching control by the motor controller according to the first embodiment of the invention.

FIG. 7 illustrates processing sequence in the drive system determination block 130 to switch from PWM driving to rectangular wave driving. In this example, the temperature of the inverter which is one of electric components is used as a parameter for motor drive system switching. The inverter temperature is monitored and, if a large heat generation is detected, a system causing less switching loss even if only slightly will be used to prevent heat damage to IGBTs and diodes.

At step S10 in FIG. 7, the drive system determination block 130 takes input of target torque Tm* and revolving speed Nm of the motor. The target torque Tm* is a value which is input from the HEV controller 14 to the motor controller 100. The revolving speed Nm is calculated from magnetic pole position θm information from the magnetic pole sensor S1 shown in FIG. 2.

Then, at step S20, it is determined whether the motor operating point falls within a switching region allowing switching between PWM driving and rectangular wave driving.

Here, a relationship between the motor driving scheme and the motor operating point is explained using FIG. 8.

The motor operating point is determined by the motor revolving speed Nm and target torque Tm*. As shown in FIG. 8, the motor driving scheme consists of a PWM driving region Apwm, a rectangular wave driving region Arct, and a switching region Aexc in which switching between PWM driving and rectangular wave driving is performed by a parameter. In the switching region Aexc, the PWM drive system which is basically run is switched to the rectangular wave drive system when a given parameter is satisfied. A boundary between the rectangular wave driving region Arct and the switching region Aexc is denoted by a solid line X1 and a boundary between the PWM driving region Apwm and the switching region Aexc is denoted by a dotted line X2.

In a conventional motor driving scheme, the switching region Aexc does no exist and the switching region Aexc is included in the PWM driving region. That is, the solid line X1 defines a boundary between the PWM driving region and the rectangular wave driving region in the conventional scheme. The dotted line X2 indicates a limit to which rectangular wave driving can be performed. Near this limit, rectangular wave driving may induce, e.g., noise, torque ripples, and the like which may discomfort the driver. Even if so, it is tolerable rather than component breakdown. In the region where the motor revolving speed Nm or the target torque Tm* is smaller than the dotted line X2, component breakdown is more likely to occur. The limit (dotted line) X2 may be varied depending on the situation.

In the example of FIG. 8, the motor operating point (Nm1, Tm1*) falls within the switching region Aexc. In the case where the operating point is within the above region, the procedure goes to step S30.

At step S30, inverter temperature Tinv (t) is input. At step S40, an inverter temperature rise rate $\Delta$Tinv (i) is calculated. Here, the inverter temperature rise rate $\Delta$Tinv (i) represents the change of inverter temperature for a predetermined time t [sec] and $\Delta$Tinv (i) is expressed by the following equation.

$$\Delta\text{Tinv (i) = Tinv (t) - Tinv (t-1)}$$

Then, at step S50, if the inverter temperature Tinv is larger than a predetermined value T0, the procedure goes to step S60; if it is less than the predetermined value, the procedure goes to step S70.

At step S70, the inverter temperature change rate $\Delta$Tinv (i) is larger than a predetermined value $\Delta$T0, the procedure goes to step S60.

At step S60, the motor drive system is switched from PWM driving to rectangular wave driving. Thereby, switching loss in the inverter can be reduced and it is hence possible to prevent damage to electric components (such as semiconductor switching elements (IGBTs and the like) due to thermal fatigue.

By means of FIG. 9, the time course of drive system switching is explained. The above-mentioned inverter temperature means that of semiconductor switching elements in the inverter. In particular, the temperature of IGBTs and diodes is monitored. Here, taking IGBT temperature as an example, the process flow with regard to the temperature is explained below. FIG. 9 represents change (average) of the IGBT temperature Tigbt with time t on the abscissa.

It is assumed that the motor operating point shown in FIG. 8 falls within the PWM driving region Apwm before time t1. When the IGBT temperature Tigbt gradually rises and becomes larger than the predetermined value T0 at time t1, as shown in FIG. 9, switching to rectangular wave driving takes place, taking the life of the inverter into consideration.

However, a threshold value for switching back from rectangular wave driving to PWM driving is a predetermined value T1 (less than the predetermined value T0), as a hysteresis is given. When the motor operating point falls within the switching region Aexc or the PWM driving region Apwm and the IGBT temperature Tigbt becomes less than the predetermined value T1, switching back to PWM driving takes place. Such hysteresis prevents hunting at switching.

From the time flow view, as above, the drive system switches to rectangular wave driving when the IGBT temperature has exceeded the predetermined value T0 and switches back to PWM driving when the IGBT temperature has become less than the predetermined value T1 in the present embodiment. It should be noted that these values T0 and T1 may be modified depending on the motor temperature rise rate or taking both IGBT and motor temperatures into consideration. This is because there is a possibility that the motor temperature remains high, whereas the IGBT temperature becomes less than T1, if T0 and T1 are set only on the basis of IGBT temperature. It is required to set T0 and T1 based on the monitored states of other components (inter alia, the motor), not only the inverter temperature.

Although the example of drive system switching depending on temperature is shown in FIG. 9, switching can depend on temperature or temperature rise rate as described in FIG. 7. The switching method may be changed depending on the situation. In a case where drive system switching is based on monitoring both temperature and temperature change rate, by maintaining interrelating maps, switching timing in various situations can be set.

While the temperature of the inverter which is one of the electric components is used as a parameter for motor drive system switching in the above example, the motor temperature may be used as another parameter or both inverter and motor temperature parameters may be used. For the motor that is normally driven by the PWM drive system having good controllability, by switching to rectangular wave driving upon the temperature rise of the motor, field weakening control becomes unneeded. Accordingly, the motor current can be decreased and the motor temperature can thus be decreased. With the decrease in the motor current, current flowing into/out of the battery can be decreased. In usage of the battery, saving its life can be achieved.

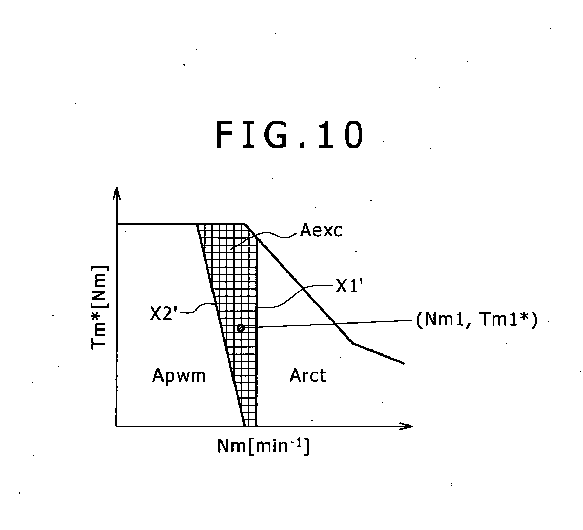

In motor drive system switching control by the motor controller of the present invention, another example of a relationship between the motor driving scheme that is used for the control and the motor operating point is explained using FIG. 10.

FIG. 10 is a diagram to explain motor drive system switching control by the motor controller according to the first embodiment of the invention.

In the example of FIG. 10, regions are defined depending on the revolving speed. As shown in FIG. 10, the motor driving scheme consists of a PWM driving region Apwm, a rectangular wave driving region Arct, and a switching region Aexc in which switching between PWM driving and rectangular wave driving is performed by a parameter. In the switching region Aexc, the PWM drive system which is basically run is switched to the rectangular wave drive system when a given parameter is satisfied. A boundary between the rectangular wave driving region Arct and the switching region Aexc is denoted by a solid line X1'. The region where the motor revolving speed Nm is larger than the solid line X1' is the rectangular wave driving region. The region where the motor revolving speed Nm is smaller than the solid line X1' is basically the PWM driving region. A boundary between the PWM driving region Apwm and the switching region Aexc is denoted by a dotted line X2'.

In the conventional motor driving scheme, the switching region Aexc does no exist and the switching region Aexc is included in the PWM driving region. That is, the solid line X1 defines a boundary between the PWM driving region and the rectangular wave driving region in the conventional scheme. The dotted line X2' indicates a limit to which rectangular wave driving can be performed. Near this limit, rectangular wave driving may induce, e.g., noise, torque ripples, and the like which may discomfort the driver. Even if so, it is tolerable rather than component breakdown. In the region where the motor revolving speed Nm or the target torque Tm* is smaller than the dotted line X2', component breakdown is more likely to occur. The limit (dotted line) X2' may be varied depending on the situation.

Although, in the foregoing example, switching from the PWM drive system to the rectangular wave drive system takes place if the parameter meets a predetermined condition, switching to another system is possible. Here, the PWM drive system is assumed to be a first drive system, a second drive system to which the drive system is switched from the PWM drive system may be the one causing less switching loss than the PWM drive system. That is, the second drive system may be a two-phase modulation system or an overmodulation system besides the rectangular wave drive system. The two-phase modulation system performs PWM switching, but one of the three phases is always unmodulated by PWM, so that switching loss is reduced. Since the switching loss caused by the rectangular wave drive system is less than that by the two-phase modulation system or the overmodulation system, switching may take place from the two-phase modulation system or the overmodulation system to the rectangular wave drive system.

For switched use of PWM driving and rectangular wave driving depending on the motor operating point as described above, switching from PWM driving to rectangular wave driving is performed at a preset operating point. For a device that is driven by a battery as the main power supply, the rectangular wave driving is applied in a rather high torque range at medium and high speed, as shown in FIG. 8. For a device in which DC voltage can be varied by a DC-DC converter or the like, switching is performed depending entirely on the motor speed.

In the present embodiment, as described above, during the motor run driven by the PWM drive system, when a given parameter has met a predetermined condition, switching to a motor drive system causing less switching loss takes place. In this way, it is possible to select a motor drive system that provides the best possible system efficiency and prevent breakdown of the inverter which is a component.

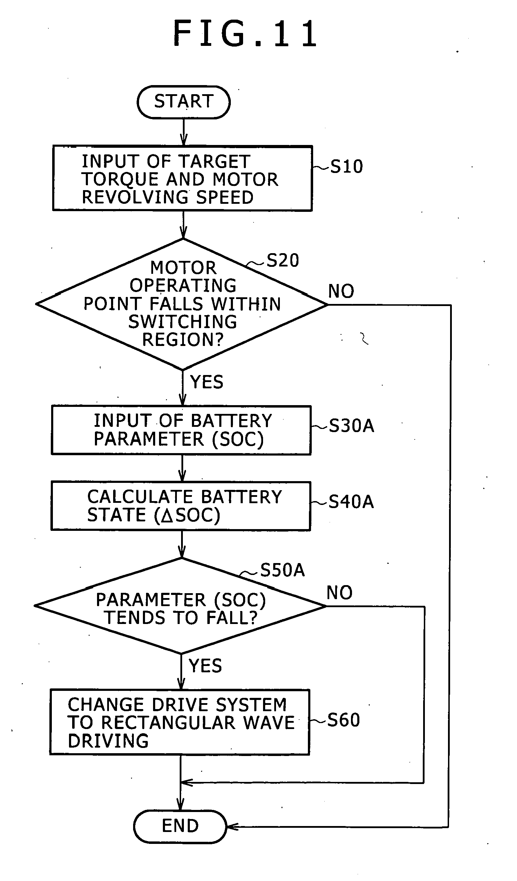

Then, using FIG. 11, a description is provided for the construction and operation of a motor controller in accordance with a second embodiment of the invention. The structure of a gasoline-electric hybrid car using an AC motor, wherein the motor controller of the second embodiment is mounted in the hybrid car, is the same as shown in FIG. 1. The structure of a motor control system using the motor controller of the second embodiment is the same as shown in FIG. 2. The configuration of the motor controller 100 of the second embodiment is the same as shown in FIG. 3.

FIG. 11 is a flowchart illustrating a procedure for motor drive system switching control by the motor controller according to the second embodiment of the invention. The same step numbers as in FIG. 7 indicate the same steps as already described in FIG. 7.

FIG. 11 illustrates processing sequence in the drive system determination block 130 to switch from PWM driving to rectangular wave driving. In this example, the charging state of the battery which is one of electric components is used as a parameter for motor drive system switching. Depending on the battery charging state, the rectangular wave drive system is used even outside the motor operating region in which rectangular wave driving is normally applied. Here, the effect of using the rectangular wave drive system is increasing the motor output as much as possible, for example, even in a situation where the battery charge amount is small and the motor output is limited.

At step S10 in FIG. 7, the drive system determination block 130 takes input of target torque Tm* and revolving speed Nm of the motor. The target torque Tm* is a value which is input from the HEV controller 14 to the motor controller 100. The revolving speed Nm is calculated from magnetic pole position θm information from the magnetic pole sensor S1 shown in FIG. 2.

Then, at step S20, it is determined whether the motor operating point falls within the switching region allowing switching between PWM driving and rectangular wave driving. The switching region shown in FIGS. 8 and 10 is applied. In the example of FIG. 8, the motor operating point (Nm1, Tm1*) falls within the switching region Aexc. In the case where the operating point is within the above region, the procedure goes to step S30.

At step S30A, the battery parameter is input. At step S40A, its change rate is calculated. Here, the battery parameter and its change rate may be, for example, State of Charge (SOC) and its change rate (ΔSOC), resistance value and its change rate, temperature and its change rate, open circuit voltage (OCV) and its change rate, current limit value, power limit value, etc. According to these values, a change in the battery voltage and current is estimated.

In this case, by SOC indicating the charge amount of the battery and its change rate ΔSOC, it is determined whether SOC tends to rise or fall in step S50A. If SOC is low or the voltage value is low, the procedure goes to step S60. SOC indicating the charge amount of the battery represents the current charging state to the full capacity of the battery in terms of percentage 0-100%.

At step S60, the motor drive system is switched from PWM driving to rectangular wave driving. Thereby, the motor output is increased as much as possible even in a situation where the motor output is limited. By switching to rectangular wave driving, field weakening control which is performed in the PWM drive system becomes unneeded and, accordingly, the motor current can be decreased.

If the battery charging state SOC rises, the upper-level controller normally controls the battery so that the SOC will not increase further. If the voltage still rises, switching from rectangular wave driving to PWM driving results in an increase in power consumption even a little. Thereby, SOC can be decreased. However, switching to the PWM drive system results in a decrease in efficiency and a rise in IGBT temperature is also a concern. Hence, this switching must be set depending on the situation and also in relation to the vehicle speed and running condition.

In a state that SOC is large, the charge amount of the battery increases when regenerative braking is applied. In such a case, by switching from rectangular wave driving to PWM driving, it is also possible to increase power consumption even a little with increased switching loss in the inverter.

In the above description, the battery charging state SOC is used by way of example, a resistance value or voltage value may be used as the parameter indicating the battery state. Values of operating points on the limit line X2, X2' denoted by the dotted line in FIGS. 8 and 10 may be predetermined depending on the battery state.

In the present embodiment, as described above, during the motor run driven by the PWM drive system, when a given parameter has met a predetermined condition, switching to a motor drive system causing less switching loss takes place. In this way, it is possible to select a motor drive system that provides the best possible system efficiency and increase the motor output.

In the example of motor drive system switching depending on the conditions of electric components such as the inverter and battery as described above, there is a tradeoff between component performance and vehicle performance such as dynamic characteristics and ride quality of the vehicle and, hence, which should be given priority may change as needed.

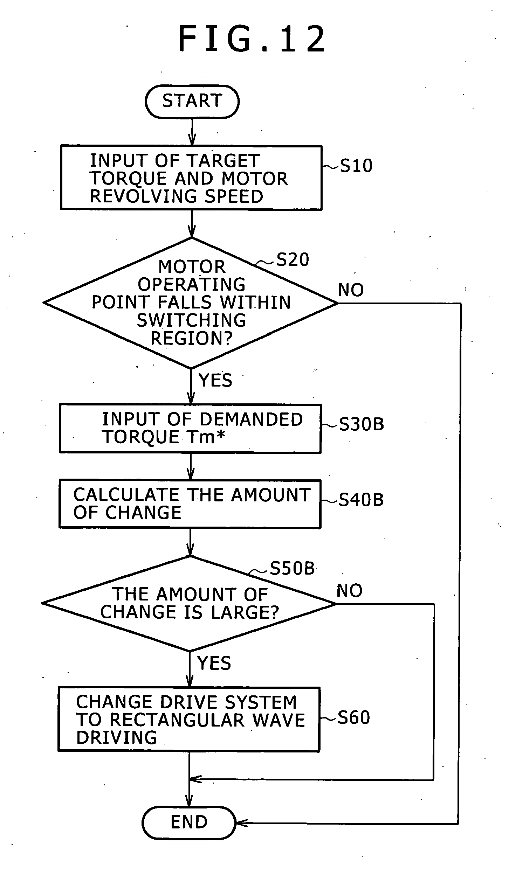

Then, using FIG. 12, a description is provided for the construction and operation of a motor controller in accordance with a third embodiment of the invention. The structure of a gasoline-electric hybrid car using an AC motor, wherein the motor controller of the third embodiment is mounted in the hybrid car, is the same as shown in FIG. 1. The structure of a motor control system using the motor controller of the third embodiment is the same as shown in FIG. 2. The configuration of the motor controller 100 of the third embodiment is the same as shown in FIG. 3.

FIG. 12 is a flowchart illustrating a procedure for motor drive system switching control by the motor controller according to the third embodiment of the invention. The same step numbers as in FIG. 7 indicate the same steps as already described in FIG. 7.

FIG. 12 illustrates processing sequence in the drive system determination block 130 to switch from PWM driving to rectangular wave driving. In this example, demanded motor torque which is one of vehicle running conditions is used as a parameter for motor drive system switching. Depending on the demanded motor torque, the rectangular wave drive system is used even outside the motor operating region in which rectangular wave driving is normally applied. Here, the effect of using the rectangular wave drive system is reducing switching loss in the inverter even a little, thus preventing deterioration of the inverter, and also increasing the motor output as much as possible, for example, even in a situation where the amount of change of demanded toque is large and acceleration is demanded.

At step S10 in FIG. 12, the drive system determination block 130 takes input of target torque Tm* and revolving speed Nm of the motor. The target torque Tm* is a value which is input from the HEV controller 14 to the motor controller 100. The revolving speed Nm is calculated from magnetic pole position θm information from the magnetic pole sensor S1 shown in FIG. 2.

Then, at step S20, it is determined whether the motor operating point falls within the switching region allowing switching between PWM driving and rectangular wave driving. The switching region shown in FIGS. 8 and 10 is applied. In the example of FIG. 8, the motor operating point (Nm1, Tm1*) falls within the switching region Aexc. In the case where the operating point is within the above region, the procedure goes to step S30.

At step S30B, a demanded toque for the vehicle is input. At step S40B, its change rate is calculated. Here, the demanded toque for the vehicle and its change rate may be demanded torque Tm* for the vehicle input from the HEV controller and its change rate. When, for example, the driver presses down the accelerator abruptly to accelerate the vehicle, a large drive torque is demanded for the vehicle. Accordingly, the accelerator pedal position and its change over time may be used.

At step S50A, it is determined whether the amount of change of the demanded torque for the vehicle is large. If so, the procedure goes to step S60.

At step S60, the motor drive system is switched from PWM driving to rectangular wave driving. Thereby, the motor output is increased as much as possible. By switching to rectangular wave driving, field weakening control which is performed in the PWM drive system becomes unneeded and, accordingly, the motor current can be decreased.

In the present embodiment, as described above, during the motor run driven by the PWM drive system, when a given parameter has met a predetermined condition, switching to a motor drive system causing less switching loss takes place. In this way, it is possible to select a motor drive system that provides the best possible system efficiency and increase the motor output.

The process described hereinbefore may be performed in the motor controller 100 or the HEV controller 14 which is an upper-level system. The drive system determination block 130 is provided in the motor controller 100 as in FIG. 3 performs the described method using the appropriate parameter input to the motor controller 100. The processing performed by the drive system determination block 130 may be performed by the HEV controller 14 which is an upper-level system. Its result may be output to the drive signal processing block 140 in the motor controller 100.

As described above, the prevent invention is applied to a gasoline-electric hybrid car using the engine and the motor coupled to the drive wheels. In addition, the invention can also be applied to a hybrid car in which a motor and a generator are mounted as separate units. The invention is beneficial as a method for increasing the drive efficiency of the inverter as much as possible, while ensuring vehicle performance to a maximum extent.

The above-described features and embodiments may be combined in any way, partly or as a whole.

**Claims**

1. A motor controller for a motor (4) that is driven by an inverter (8), the motor controller (100) comprising:

   a drive signal processing block (140) that outputs drive signals to said motor (4) by using a first drive system and a second drive system causing less switching loss than the first drive system, depending on a demanded torque for said motor (4); and

   a drive system determination block (130) that, when an operating point of said motor (4) allows selection between said first drive system and said second drive system, performs switching from said first drive system to said second drive system, based on a condition of an electric component of a vehicle (1) or a running condition of the vehicle (1).

2. The motor controller according to claim 1, wherein said drive system determination block (130) performs switching from said first drive system to said second drive system, if temperature of said inverter (8) which is the condition of an electric component of said vehicle (1) or a time rate of change of the temperature has exceeded a predetermined value.

3. The motor controller according to claim 1 or claim 2, wherein said drive system determination block (130) performs switching from said second drive system to said first drive system, if said inverter temperature which is the condition of an electric component of said vehicle (1) has become less than a second predetermined value that is smaller than said predetermined value.

4. The motor controller according to at least one of claims 1 to 3, wherein said drive system determination block (130) performs switching from said first drive system to said second drive system, if charging state of a battery (9) which is the condition of an electric component of said vehicle (1) is lower than a predetermined value or a rate of decrease in the charging state has exceeded a predetermined value.

5. The motor controller according to at least one of claims 1 to 4, wherein said drive system determination block (130) performs switching from said first drive system to said second drive system, if a demanded drive torque which is a running condition of said vehicle (1) is large.

6. The motor controller according to at least one of claims 1 to 5, wherein said drive system determination block (130) performs switching from said first drive system to said second drive system, if an accelerator pedal position which is a running condition of said vehicle (1) or a time rate of change of the accelerator pedal position is larger than a predetermined value.

7. The motor controller according to at least one of claims 1 to 6, wherein said drive system determination block (130) performs switching from said second drive system to said first drive system, if the charging state of the battery (9) which is the condition of an electric component of said vehicle (1) is higher than a predetermined value or a rate of increase in the charging state has exceeded a predetermined value.

# F I G . 1

# F I G . 2

# FIG.3

# FIG.4

(A)

Crr

Vm*(Avr)

(B)

Vdc/2

-Vdc/2

Drv(PWM)

# FIG.5

Tprd

Pu

Pv

Pw

II   III   IV   V   VI   I

# F I G . 6

# FIG.7

```
         ( START )
             │
             ▼
┌─────────────────────────┐
│ INPUT OF TARGET         │~S10
│ TORQUE AND MOTOR        │
│ REVOLVING SPEED         │
└─────────────────────────┘
             │
             ▼
        ╱─────────╲  ~S20
       ╱  MOTOR    ╲
      ╱  OPERATING  ╲        NO
     ╱ POINT FALLS WITHIN╲──────────────────┐
      ╲  SWITCHING  ╱                        │
       ╲ REGION?   ╱                         │
        ╲─────────╱                          │
             │ YES                           │
             ▼                               │
┌─────────────────────────┐                 │
│ INPUT OF INVERTER       │~S30             │
│ TEMPERATURE Tinv(t)     │                 │
└─────────────────────────┘                 │
             │                               │
             ▼                               │
┌─────────────────────────┐                 │
│ CALCULATE INVERTER      │~S40             │
│ TEMPERATURE RISE RATE   │                 │
│ ΔTinv(t)                │                 │
└─────────────────────────┘                 │
             │                               │
             ▼                               │
        ╱─────────╲  ~S50                    │
       ╱           ╲       NO                │
      ╱   Tinv>T0   ╲──────────┐            │
       ╲           ╱            │            │
        ╲─────────╱             ▼            │
             │ YES         ╱─────────╲ ~S70  │
             │            ╱           ╲  NO  │
             │           ╱ ΔTinv>ΔT0  ╲──────┤
             │            ╲           ╱       │
             │             ╲─────────╱        │
             │                  │ YES         │
             ◄──────────────────┘             │
             ▼                                │
┌─────────────────────────┐                  │
│ SWITCH MOTOR DRIVE      │~S60              │
│ SYSTEM TO RECTANGULAR   │◄─────────────────┤
│ WAVE DRIVING            │                  │
└─────────────────────────┘                  │
             │                                │
             ▼                                │
         (  END  )◄───────────────────────────┘
```

# F I G . 8

# F I G . 9

# FIG.10

# FIG.11

```
        ( START )
            │
            ▼
┌─────────────────────┐
│ INPUT OF TARGET     │  ~S10
│ TORQUE AND MOTOR    │
│ REVOLVING SPEED     │
└─────────────────────┘
            │
            ▼
        ╱MOTOR╲          ~S20
      ╱ OPERATING ╲
    ╱ POINT FALLS WITHIN ╲   NO
    ╲   SWITCHING       ╱ ──────┐
      ╲  REGION?  ╱             │
            │                   │
          YES                   │
            ▼                   │
┌─────────────────────┐        │
│ INPUT OF BATTERY    │  ~S30A │
│ PARAMETER (SOC)     │        │
└─────────────────────┘        │
            │                   │
            ▼                   │
┌─────────────────────┐        │
│ CALCULATE BATTERY   │  ~S40A │
│ STATE (ΔSOC)        │        │
└─────────────────────┘        │
            │                   │
            ▼       ~S50A       │
      ╱ PARAMETER (SOC) ╲   NO  │
    ╲  TENDS TO FALL?  ╱ ───┐  │
            │               │  │
          YES               │  │
            ▼               │  │
┌─────────────────────┐     │  │
│ CHANGE DRIVE SYSTEM │~S60 │  │
│ TO RECTANGULAR WAVE │     │  │
│ DRIVING             │     │  │
└─────────────────────┘     │  │
            │               │  │
            ▼◄──────────────┘  │
        ( END )◄───────────────┘
```

# FIG.12

```
                    ┌─────────┐
                    │  START  │
                    └─────────┘
                         │
                         ▼
          ┌───────────────────────────┐
          │ INPUT OF TARGET           │──S10
          │ TORQUE AND MOTOR          │
          │ REVOLVING SPEED           │
          └───────────────────────────┘
                         │
                         ▼
              ╱─────────────────╲  ─S20
             ╱      MOTOR         ╲
            ╱     OPERATING        ╲      NO
           ╱  POINT FALLS WITHIN    ╲────────────┐
            ╲     SWITCHING        ╱             │
             ╲     REGION?        ╱              │
              ╲─────────────────╱                │
                    │ YES                        │
                    ▼                            │
          ┌───────────────────────────┐         │
          │ INPUT OF DEMANDED         │──S30B    │
          │ TORQUE Tm*                │          │
          └───────────────────────────┘         │
                    │                            │
                    ▼                            │
          ┌───────────────────────────┐         │
          │ CALCULATE THE AMOUNT      │──S40B    │
          │ OF CHANGE                 │          │
          └───────────────────────────┘         │
                    │                            │
                    ▼                            │
              ╱─────────────────╲  ─S50B         │
             ╱  THE AMOUNT OF    ╲      NO        │
            ╱  CHANGE IS LARGE?   ╲──────────┐    │
             ╲                   ╱           │    │
              ╲─────────────────╱            │    │
                    │ YES                    │    │
                    ▼                        │    │
          ┌───────────────────────────┐     │    │
          │ CHANGE DRIVE SYSTEM       │──S60 │    │
          │ TO RECTANGULAR WAVE       │      │    │
          │ DRIVING                   │      │    │
          └───────────────────────────┘     │    │
                    │                        │    │
                    ▼◄───────────────────────┘    │
                ┌─────────┐                       │
                │   END   │◄──────────────────────┘
                └─────────┘
```

**REFERENCES CITED IN THE DESCRIPTION**

**Patent documents cited in the description**

- JP HEI11299297 A